# EUROPEAN PATENT APPLICATION

(11) **EP 3 197 105 A1**
(43) Date of publication of application: **26.07.2017**
(21) Application number: 15758288.3
(22) Date of filing: 21.01.2015
(51) Int. Cl.: H04L 12/66, H04L 29/08, G08C 19/00

(54) **SENSOR CODE-PAIRING PROCESSING METHOD, APPARATUS, NETWORK PLATFORM DEVICE, AND INTERNET OF THINGS GATEWAY**

(30) Priority: 17.09.2014 CN 201410476524
(71) Applicant: ZTE Corporation, Shenzhen, Guangdong 518057 (CN)
(72) Inventor: ZHAO, Jiawei, Shenzhen Guangdong 518057 (CN); CHEN, Jianlin, Shenzhen Guangdong 518057 (CN)
(74) Representative: Carangelo, Pierluigi
(86) International application number: PCT/CN2015/071257
(87) International publication number: WO 2015/131689

(57) **Abstract**

The embodiments of the disclosure provide a method and device for joining network processing of a sensor, network platform equipment and an Internet of things gateway. Wherein, the method includes that: a joining network request message used for requesting to perform joining network on the sensor is received, wherein the joining network request message contains Identity, ID, information of the sensor; a joining network state of the sensor is determined according to the ID information; and the determined joining network state is sent to an Internet of things gateway, wherein the joining network state is used for executing joining network processing on the sensor by the Internet of things gateway. By the embodiments of the disclosure, the problem of potential safety hazards in a joining network process for the sensor due to existence of an illegal intruder in the related technology is solved, and an effect of effectively improving access security of the sensor is further achieved.

## Description

### Technical Field

The embodiments of the disclosure relate to the field of communications, and more particularly to a method and device for joining network processing of a sensor, network platform equipment and an Internet of things gateway.

### Background

The Internet of things is an important part of a new-generation information technology, and it connects sensors, controllers, machines, people, things and the like together in a new manner to form connections between the people and the things and between the things to implement an informational, remote management and control and intelligent network by virtue of a communication technology of a local area network, the Internet or the like.

An Internet of things gateway and sensors are important parts in an Internet of things system, wherein the Internet of things gateway is a center which connects a sensor network with the Internet, its rear end manages and controls multiple sensors, and a front end is connected with the Internet. Before forwarding data of the sensors, the Internet of things gateway is required to implement a "joining network" process between the Internet of things gateway and the sensors. "Joining network" refers to that the sensors and the Internet of things gateway exchange equipment Identity, ID, information of each other to achieve a purpose of mutual recognition between the two parties through a certain protocol. That is, the Internet of things gateway implements access control and management over the sensors in a "joining network" manner.

In a related art, a joining network manner for a sensor and an Internet of things gateway includes one-way joining network and two-way joining network according to different Radio Frequency (RF) solutions, wherein two-way joining network refers to that the Internet of things gateway and the sensor support two-way communication and they may mutually exchange equipment information to implement identification and authentication of each other. After joining network is completed, a code-verified Internet of things gateway ID is stored in sensor equipment, a code-verified equipment ID of the sensor is stored in the Internet of things gateway, and mutual addressing for subsequent data interaction is implemented on the basis of the equipment IDs.

At present, there are two triggering manners for two-way joining network, the first is active triggering by the sensor, and the second is triggering by the Internet of things gateway. A basic principle for joining network triggered by the Internet of things gateway is that the Internet of things gateway sends a sensor awakening message to a specific sensor according to an ID of the sensor, the Internet of things gateway and the sensor send joining network messages and joining network confirmation messages to each other according to a protocol interaction sequence after the sensor is awakened, the joining network messages containing respective equipment ID information, and the two parties finally implement identification and storage of the equipment ID information of each other. Particularly for the second joining network triggering manner, there exist certain potential safety hazards. For example, an illegal intruder may construct an illegal Internet of things gateway in the vicinity of a sensor of a user after learning about an ID of the sensor of the user, and because message definitions for a joining network process between the Internet of things gateway and the sensor are nonstandard, versions of the Internet of things gateway controlled by the illegal intruder and an Internet of things gateway of the user are usually the same, and the Internet of things gateway triggers a two-way joining network flow to the sensor with the known ID to free the sensor of the user from management of a legal sensor for access to the illegal Internet of things gateway to cause loss of sensor data.

Therefore, there exists the problem of potential safety hazards in a joining network process for a sensor due to existence of an illegal intruder in the related technology.

### Summary

The embodiments of the disclosure provide a method and device for joining network processing of a sensor, network platform equipment and an Internet of things gateway, so as to at least solve the problem of potential safety hazards in a joining network process for the sensor due to existence of an illegal intruder in the related technology.

According to an aspect of the embodiments of the disclosure, a method for joining network processing of a sensor is provided, which may include that: a joining network request message used for requesting to perform joining network on the sensor is received, wherein the joining network request message may contain ID information of the sensor; a joining network state of the sensor is determined according to the ID information; and the determined joining network state is sent to an Internet of things gateway, wherein the joining network state may be used for executing joining network processing on the sensor by the Internet of things gateway.

In the embodiment of the disclosure, the step that the joining network request message used for requesting to perform joining network on the sensor is received may include at least one of that: the joining network request message from the Internet of things gateway is received; and the joining network request message from a mobile terminal Application,(APP), is received.

In the embodiment of the disclosure, the ID information of the sensor may include at least one of: a unique ID of the sensor, a type of the sensor and a working manner of the sensor.

According to another aspect of the embodiments of the disclosure, a method for joining network processing of a sensor is provided, which may include that: a joining network request message used for requesting to perform joining network on the sensor is received, wherein the joining network request message may contain ID information of the sensor; the joining network request message is sent to network platform equipment; a joining network state, determined by the network platform equipment according to the ID information, of the sensor is received; and joining network processing is executed on the sensor according to the determined joining network state.

In the embodiment of the disclosure, the step that joining network processing is executed on the sensor according to the determined joining network state may include that: the execution of joining network processing is forbidden on the sensor under a condition that the joining network state is that joining network has been executed on the sensor or joining network is forbidden; and/or, joining network processing is triggered to execute on the sensor under a condition that the joining network state is that joining network has not been executed on the sensor or joining network is allowed.

According to another aspect of the embodiments of the disclosure, a device for joining network processing of a sensor is provided, which may include: a first receiving component, arranged to receive a joining network request message used for requesting to perform joining network on the sensor, wherein the joining network request message may contain ID information of the sensor; a determination component, arranged to determine a joining network state of the sensor according to the ID information; and a sending component, arranged to send the determined joining network state to an Internet of things gateway, wherein the joining network state may be used for executing joining network processing on the sensor by the Internet of things gateway.

In the embodiment of the disclosure, the first receiving component may include at least one of: a first receiving unit, arranged to receive the joining network request message from the Internet of things gateway; and a second receiving unit, arranged to receive the joining network request message from a mobile terminal APP.

According to another aspect of the embodiments of the disclosure, network platform equipment is provided, which may include any abovementioned device.

According to another aspect of the embodiments of the disclosure, a device for joining network processing of a sensor is provided, which may include: a second receiving component, arranged to receive a joining network request message used for requesting to perform joining network on the sensor, wherein the joining network request message may contain ID information of the sensor; a first sending component, arranged to send the joining network request message to network platform equipment; a third receiving component, arranged to receive a joining network state, determined by the network platform equipment according to the ID information, of the sensor; and a processing component, arranged to execute joining network processing on the sensor according to the determined joining network state.

In the embodiment of the disclosure, the processing component may include: a first processing unit, arranged to forbid execution of joining network processing on the sensor under a condition that the joining network state is that joining network has been executed on the sensor or joining network is forbidden; and/or, a second processing unit, arranged to trigger to execute joining network processing on the sensor under a condition that the joining network state is that joining network has not been executed on the sensor or joining network is allowed.

According to another aspect of the embodiments of the disclosure, an Internet of things gateway is provided, which may include any abovementioned device.

According to the embodiments of the disclosure, the joining network request message used for requesting to perform joining network on the sensor is received, wherein the joining network request message contains the ID information of the sensor; the joining network state of the sensor is determined according to the ID information; and the determined joining network state is sent to the Internet of things gateway, wherein the joining network state is used for executing joining network processing on the sensor by the Internet of things gateway. The problem of potential safety hazards in a joining network process for the sensor due to existence of an illegal intruder in the related technology is solved, and an effect of effectively improving access security of the sensor is further achieved.

### Brief Description of the Drawings

The drawings described here are adopted to provide a further understanding to the embodiments of the disclosure, and form a part of the embodiments of the disclosure. Schematic embodiments of the embodiments of the disclosure and descriptions thereof are adopted to explain the embodiments of the disclosure and not intended to form improper limits to the embodiments of the disclosure. In the drawings:
Fig. 1 is a flowchart of a first method for joining network processing of a sensor according to an embodiment of the embodiments of the disclosure;
Fig. 2 is a flowchart of a second method for joining network processing of a sensor according to an embodiment of the embodiments of the disclosure;
Fig. 3 is a structure block diagram of a first device for joining network processing of a sensor according to an embodiment of the embodiments of the disclosure;
Fig. 4 is a preferred structure block diagram of a first receiving component 32 in a first device for joining network processing of a sensor according to an embodiment of the embodiments of the disclosure;
Fig. 5 is a structure block diagram of network platform equipment according to an embodiment of the embodiments of the disclosure;
Fig. 6 is a structure block diagram of a second device for joining network processing of a sensor according to an embodiment of the embodiments of the disclosure;
Fig. 7 is a preferred structure block diagram of a processing component 68 in a second device for joining network processing of a sensor according to an embodiment of the embodiments of the disclosure;
Fig. 8 is a structure block diagram of an Internet of things gateway according to an embodiment of the embodiments of the disclosure;
Fig. 9 is a schematic diagram of a network architecture according to a preferred implementation mode of the embodiments of the disclosure;
Fig. 10 is a flowchart of a sensor control method according to an embodiment of the embodiments of the disclosure;
Fig. 11 is a structure diagram of network platform equipment according to an implementation mode of the embodiments of the disclosure; and
Fig. 12 is a structure diagram of an Internet of things gateway according to a preferred implementation mode of the embodiments of the disclosure.

### Detailed Description of the Embodiments

The embodiments of the disclosure will be described below with reference to the drawings and embodiments in detail. It is important to note that the embodiments in the embodiments of the disclosure and characteristics in the embodiments may be combined under a condition of no conflicts.

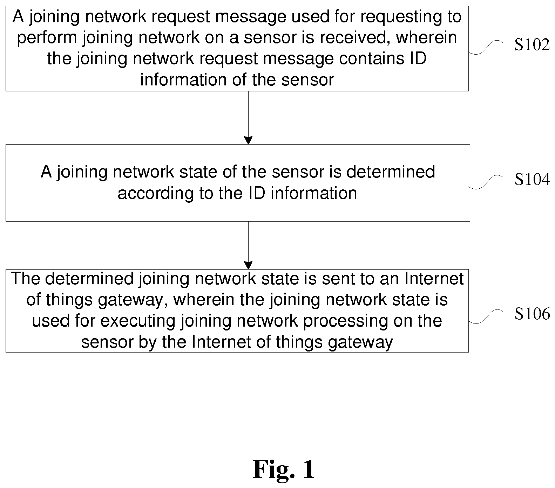

The embodiments provide a method for joining network processing of a sensor. Fig. 1 is a flowchart of a first method for joining network processing of a sensor according to an embodiment of the embodiments of the disclosure. As shown in Fig. 1, a flow includes the following steps.

Step S102: a joining network request message used for requesting to perform joining network on the sensor is received, wherein the joining network request message contains ID information of the sensor.

Step S104: a joining network state of the sensor is determined according to the ID information.

Step S106: the determined joining network state is sent to an Internet of things gateway, wherein the joining network state is used for executing joining network processing on the sensor by the Internet of things gateway.

By the steps, the joining network state of the sensor is determined according to the ID information of the sensor, and joining network processing is executed according to the joining network state. Therefore, for the problem of potential safety hazards in case of existence of an illegal intruder in the related technology where the Internet of things gateway directly executes joining network processing, the problem of potential safety hazards in a joining network process for the sensor due to existence of the illegal intruder is effectively solved, and an effect of effectively improving access security of the sensor is further achieved.

Multiple manners may be adopted for receiving the joining network request message used for requesting to perform joining network on the sensor, that is, there may be multiple joining network request sources, which, for example, may include at least one of that: the joining network request message from the Internet of things gateway is received; and the joining network request message from a mobile terminal APP is received. Wherein, there may also be multiple types of ID information of the sensor, which, for example, may include at least one of: a unique ID of the sensor, a type of the sensor and a working manner of the sensor.

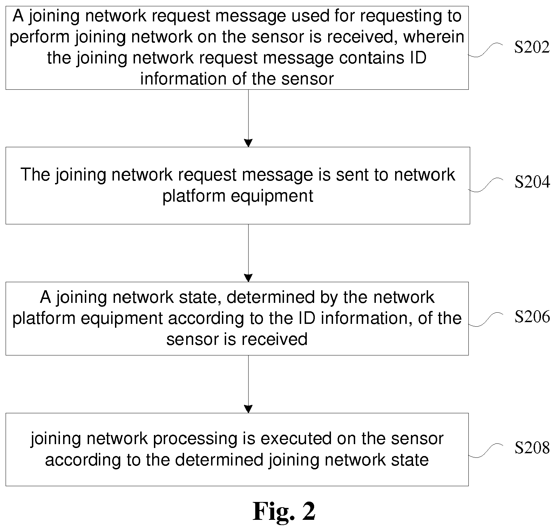

Fig. 2 is a flowchart of a second method for joining network processing of a sensor according to an embodiment of the embodiments of the disclosure. As shown in Fig. 2, a flow includes the following steps.

Step S202: a joining network request message used for requesting to perform joining network on the sensor is received, wherein the joining network request message contains ID information of the sensor.

Step S204: the joining network request message is sent to network platform equipment.

Step S206: a joining network state, determined by the network platform equipment according to the ID information, of the sensor is received.

Step S208: joining network processing is executed on the sensor according to the determined joining network state.

By the steps, the joining network state of the sensor is determined according to the ID information of the sensor, and joining network processing is executed according to the joining network state. Therefore, for the problem of potential safety hazards in case of existence of an illegal intruder in the related technology where the Internet of things gateway directly executes joining network processing, the problem of potential safety hazards in a joining network process for the sensor due to existence of the illegal intruder is effectively solved, and an effect of effectively improving access security of the sensor is further achieved.

When joining network processing is executed on the sensor according to the determined joining network state, the following processing may be included: execution of joining network processing is forbidden on the sensor under a condition that the joining network state is that joining network has been executed on the sensor or joining network is forbidden; and/or, joining network processing is triggered to execute on the sensor under a condition that the joining network state is that joining network has not been executed on the sensor or joining network is allowed.

The embodiments further provide a device for joining network processing of a sensor. The device is arranged to implement the abovementioned embodiments and preferred implementation modes, and what has been described will not be elaborated. For example, term "component", used below, is a combination of software and/or hardware capable of realizing a preset function. Although the device described in the following embodiment is preferably implemented with software, implementation with hardware or a combination of the software and the hardware is also possible and conceivable.

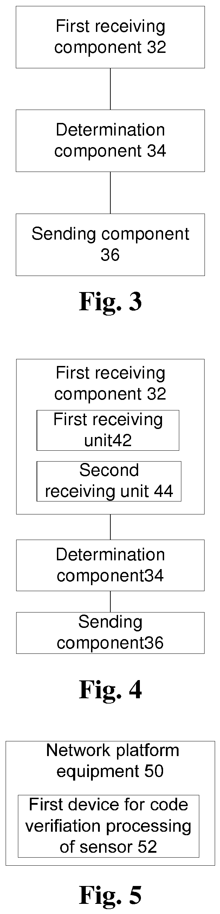

Fig. 3 is a structure block diagram of a first device for joining network processing of a sensor according to an embodiment of the embodiments of the disclosure. As shown in Fig. 3, the device includes a first receiving component 32, a determination component 34 and a sending component 36. The device will be described below.

The first receiving component 32 is arranged to receive a joining network request message used for requesting to perform joining network on the sensor, wherein the joining network request message contains ID information of the sensor; the determination component 34 is connected to the first receiving component 32, and is arranged to determine a joining network state of the sensor according to the ID information; and the sending component 36 is connected to the determination component 34, and is arranged to send the determined joining network state to an Internet of things gateway, wherein the joining network state is used for executing joining network processing on the sensor by the Internet of things gateway.

Fig. 4 is a preferred structure block diagram of a first receiving component 32 in a first device for joining network processing of a sensor according to an embodiment of the embodiments of the disclosure. As shown in Fig. 4, the first receiving component 32 includes at least one of: a first receiving unit 42 and a second receiving unit 44. The first receiving component 32 will be described below.

The first receiving unit 42 is arranged to receive the joining network request message from the Internet of things gateway; and the second receiving unit 44 is arranged to receive the joining network request message from a mobile terminal APP.

Fig. 5 is a structure block diagram of network platform equipment according to an embodiment of the embodiments of the disclosure. As shown in Fig. 5, the network platform equipment 50 includes any abovementioned first device 52 for joining network processing of the sensor.

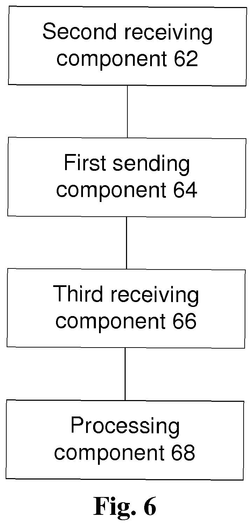

Fig. 6 is a structure block diagram of a second device for joining network processing of a sensor according to an embodiment of the embodiments of the disclosure. As shown in Fig. 6, the device includes a second receiving component 62, a first sending component 64, a third receiving component 66 and a processing component 68. The device will be described below.

The second receiving component 62 is arranged to receive a joining network request message used for requesting to perform joining network on the sensor, wherein the joining network request message contains ID information of the sensor; the first sending component 64 is connected to the second receiving component 62, and is arranged to send the joining network request message to network platform equipment; the third receiving component 66 is connected to the first sending component 64, and is arranged to receive a joining network state, determined by the network platform equipment according to the ID information, of the sensor; and the processing component 68 is connected to the third receiving component 66, and is arranged to execute joining network processing on the sensor according to the determined joining network state.

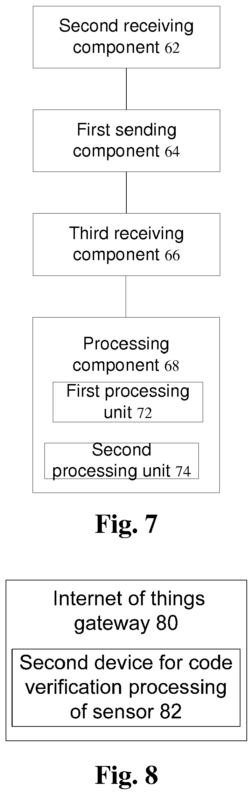

Fig. 7 is a preferred structure block diagram of a processing component 68 in a second device for joining network processing of a sensor according to an embodiment of the embodiments of the disclosure. As shown in Fig. 7, the processing component 68 includes at least one of a first processing unit 72 and a second processing unit 74. The processing component 68 will be described below.

The first processing unit 72 is arranged to forbid execution of joining network processing on the sensor under a condition that the joining network state is that joining network has been executed on the sensor or joining network is forbidden; and/or, the second processing unit 74 is arranged to trigger to exectute joining network processing on the sensor under a condition that the joining network state is that joining network has not been executed on the sensor or joining network is allowed.

Fig. 8 is a structure block diagram of an Internet of things gateway according to an embodiment of the embodiments of the disclosure. As shown in Fig. 8, the Internet of things gateway 80 includes any abovementioned second device 82 for joining network processing of the sensor.

For potential safety hazards in two-way joining network of a sensor in the related technology, the embodiment provides a sensor control solution. A joining network state of the sensor is identified through a network platform on the premise that an illegal intruder has yet not intruded the Internet of things network platform before a two-way joining network process is practically executed, thereby implementing security control over access of the sensor. By the solution, access security of the sensor may be effectively improved.

For the potential safety hazards in two-way joining network between a sensor and an Internet of things gateway, particularly an Internet of things-based two-way joining network triggering manner, a joining network solution includes the following processing: network platform equipment receives a joining network request message of the sensor; the network platform equipment determines a joining network state of the sensor according to ID information of the sensor; and the network platform equipment sends a joining network control message of the sensor according to joining network state information of the sensor.

Wherein, the ID information of the sensor and the corresponding joining network state information of the sensor are stored in the network platform equipment; the joining network state information of the sensor at least includes a latest joining network result of the sensor, including that joining network has been executed or joining network has yet not been executed, wherein the joining network request message, received by the network platform, for the sensor is from external network equipment which initiates a joining network request, and the external network equipment includes, but not limited to, the Internet of things gateway, a mobile intelligent terminal APP, other third-party communication equipment and software.

Wherein, the joining network request message for the sensor at least includes the ID information of the sensor, the ID information of the sensor includes, but not limited to, an ID of the sensor, a type of the sensor, a working manner of the sensor and the like.

A content of the joining network control message is generated according to the joining network state, and the content of the joining network control message includes, but not limited to, the joining network state of the sensor and whether joining network of the sensor is allowed or not.

The external network equipment analyzes the message content after receiving the joining network control message of the sensor, and controls joining network of the sensor to be triggered according to the joining network state of the sensor or information indicating whether joining network of the sensor is allowed or not. In general, if the joining network state of the sensor is that joining network has been executed (or joining network is forbidden), joining network of the sensor is not triggered; and if the joining network state of the sensor is that joining network has yet not been executed (or joining network is allowed), joining network of the sensor is triggered.

A preferred implementation mode of the embodiments of the disclosure will be described below with reference to the drawings.

In the embodiment, an initiator of a joining network request message for a sensor is an Internet of things gateway, and the Internet of things gateway is controlled by an intelligent mobile phone APP to initiate a joining network function for the sensor. Before joining network processing: the intelligent mobile phone starts a Wireless Fidelity (Wi-Fi) component, and is connected to wireless router equipment in a home of a user as default, and the Internet of things gateway is also connected to the wireless router equipment through Wi-Fi or in a wireless connecting manner. The intelligent mobile phone APP provides the joining network function for the sensor, the user manually inputs ID information of the sensor on which joining network is to be performed on the APP (an ID is usually a character string with a fixed length and mixed with numbers and characters, such as "S0134001001002"), or automatically scans two-dimensional code information corresponding to the ID of the sensor through a two-dimensional code scanning tool of the APP, the APP triggers a joining network command to the Internet of things gateway through a self-encapsulated Hyper Text Transport Protocol (HTTP) after acquiring the ID of the sensor, and the Internet of things gateway analyzes the ID of the sensor on which joining network is to be performed after receiving the joining network command, encapsulates the joining network request message for the sensor, the joining network request message including the ID of the sensor, and then sends it to the network platform equipment through a Transfer Control Protocol/Internet Protocol (TCP/IP), wherein the Internet of things gateway may query and acquire a corresponding IP address of the network platform equipment through a domain name, and transmits the joining network request message through a self-defined protocol.

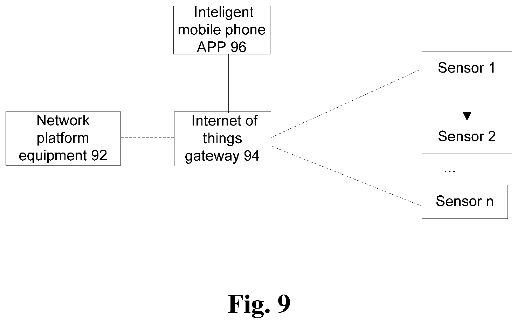

Fig. 9 is a schematic diagram of a network architecture according to a preferred implementation mode of the embodiments of the disclosure. As shown in Fig. 9, the network architecture includes network platform equipment 92, an Internet of things gateway 94, an intelligent mobile phone APP 96 and one or more sensors.

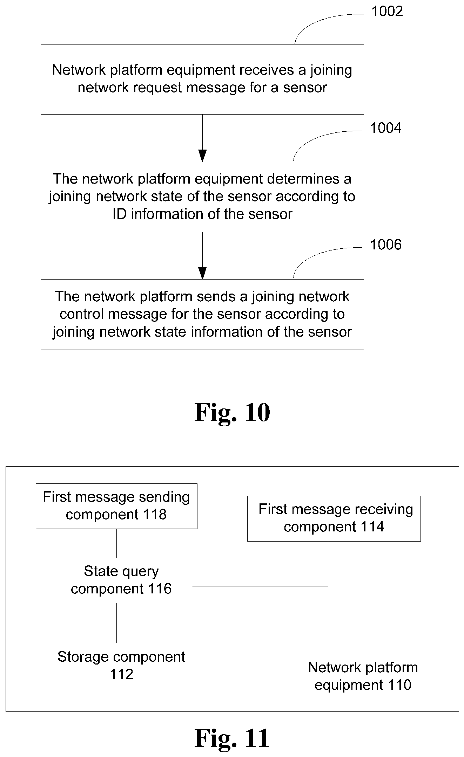

Fig. 10 is a flowchart of a sensor control method according to an embodiment of the embodiments of the disclosure. As shown in Fig. 10, a flow includes the following steps.

Step S1002: network platform equipment receives a joining network request message for a sensor. In the embodiment, the network platform equipment receives a joining network request message for the sensor from an Internet of things gateway.

Step S1004: the network platform equipment determines a joining network state of the sensor according to ID information of the sensor. In the embodiment, the network platform equipment acquire the ID information of the sensor by protocol analysising, and queries a storage component through software to acquire a joining network state corresponding to the sensor to be that "joining network has been executed", thereby implementing confirmation of the joining network state.

The network platform equipment is required to store joining network state information of the sensor, and a storage manner is to add or update the joining network state after a joining network link is implemented and confirmed. Storage usually adopts a database technology. In the implementation method, the joining network state, stored in a network platform, of the sensor is that "joining network has been executed", which indicates that at least one joining network process has been completed and joining network succeeds before this joining network of the sensor and the sensor is in a service state.

Step S1006: the network platform sends a joining network control message for the sensor according to the joining network state information of the sensor. In the embodiment, the joining network state of the sensor is that "joining network has been executed", the network platform equipment generates the joining network control message according to the joining network state information, fields of the joining network control message for the sensor including an ID of the sensor, the joining network state="joining network has been executed" and whether joining network is allowed or not="NO", and then the network platform equipment sends the joining network control message for the sensor to the Internet of things gateway through a self-defined protocol TCP/IP.

After receiving the joining network control message for the sensor, the Internet of things gateway analyzes the joining network control message, may not trigger a two-way joining network process with the sensor after judging that the field whether joining network is allowed is "NO", and sends a joining network result of the sensor to an intelligent mobile phone APP through a self-defined HTTP interface, the joining network result of the embodiment is that "joining network has been executed on the sensor and please unbind for joining network".

In the embodiment, under a condition that the joining network state, stored in the network platform equipment, of the sensor is that "joining network has yet not been executed" or there is no joining network record for the sensor, the network platform equipment generates a joining network control message of which fields include the ID of the sensor, the joining network state="joining network has yet not been executed" and whether joining network is allowed or not="YES", and then the network platform equipment sends the joining network control message for the sensor to the Internet of things gateway through the self-defined protocol TCP/IP.

The Internet of things gateway analyzes the joining network control message after receiving the joining network control message for the sensor, and actively triggers the two-way joining network process with the sensor after judging that the field whether joining network is allowed is "YES", including awakening of the sensor and interaction and identification of the ID. Finally, the Internet of things gateway sends a joining network result of the sensor that "joining network of the sensor has succeeded" to the intelligent mobile phone APP through the self-defined HTTP interface. Meanwhile, the Internet of things gateway sends a message that "joining network succeeded" to the network platform equipment, and the network platform equipment updates the joining network state of the sensor to be that "joining network has been executed".

By abovementioned processing, the following software function is added to the network platform equipment on the premise of not changing hardware. Fig. 11 is a structure diagram of network platform equipment according to an implementation mode of the embodiments of the disclosure. As shown in Fig. 11, the network platform equipment 110 includes a storage component 112, a first message receiving component 114 (with a function equivalent to the first receiving component 32), a state query component 116 (with a function the same as the determination component 34) and a first message sending component 118 (with a function equivalent to the sending component 36). The network platform equipment 110 will be described below.

The storage component 112 is arranged to store a latest joining network state of a sensor and corresponding ID information of the sensor. In the embodiment, the storage component adopts a database technology, and an ID and joining network state information of the sensor are stored in a table manner. The stored joining network state information of the sensor is that "joining network has been executed".

The first message receiving component 114 receives a joining network request message for the sensor. In the embodiment, the network platform equipment receives the joining network request message for the sensor from an Internet of things gateway through a TCP/IP technology.

The state query component 116 queries the latest joining network state of the sensor according to the ID information of the sensor. Network gateway equipment analyzes the joining network request message for the sensor to acquire the ID of the sensor, and calls the storage component to confirm that a current joining network state of the sensor is that "joining network has been executed".

The first message sending component 118 generates a joining network control message for the sensor according to the joining network state information, generated by the state query component, of the sensor, and sends it to external network equipment which initiates a joining network request. In the embodiment, the joining network state of the sensor is that "joining network has been executed", the network platform equipment generates the joining network control message according to the joining network state information, fields of the joining network control message for the sensor including the ID of the sensor, the joining network state="joining network has been executed" and whether joining network is allowed or not="NO", and then the network platform equipment sends the joining network control message for the sensor to the Internet of things gateway through a self-defined protocol TCP/IP.

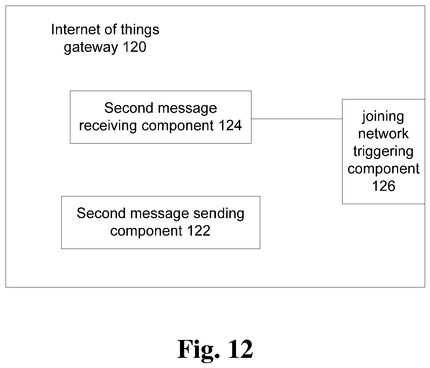

According to the method provided by the embodiment, the following software function is added to the Internet of things gateway on the premise of not changing hardware. Fig. 12 is a structure diagram of an Internet of things gateway according to a preferred implementation mode of the embodiments of the disclosure. As shown in Fig. 12, the Internet of things gateway 120 includes a second message sending component 122 (with a function the same as the first sending component 64), a second message receiving component 124 (with a function the same as the third receiving component 66) and a joining network triggering component 126. The device will be described below.

The second message sending component 122 sends a joining network request message for a sensor to a network platform. In the embodiment, the Internet of things gateway analyses an ID of the sensor on which joining network is to be performed after receiving a joining network command of an intelligent mobile phone APP, encapsulates the joining network request message for the sensor, the joining network request message including the ID of the sensor, and then sends it to network platform equipment through a TCP/IP.

The second message receiving component 124 receives a joining network control message for the sensor from the network platform. In the embodiment, the Internet of things gateway receives the joining network control message for the sensor.

The joining network triggering component 126 analyses a message content according to the joining network control message for the sensor, and controls joining network of the sensor to be triggered according to a joining network state of the sensor or information indicating whether joining network of the sensor is allowed or not. In general, under a condition that the joining network state of the sensor is that joining network has been executed (or joining network is forbidden), joining network of the sensor is not triggered; and if the joining network state of the sensor is that joining network has yet not been executed (or joining network is allowed), joining network of the sensor is triggered. In the embodiment, because the field whether joining network is allowed is "NO", a two-way joining network process with the sensor is not triggered. Then, a joining network result of the sensor that "joining network has been executed on the sensor and please unbind for joining network" is sent to an intelligent mobile phone APP through a self-defined HTTP interface.

Obviously, those skilled in the art should know that each component or each step of the embodiments of the disclosure may be implemented by a universal computing device, and the components or steps may be concentrated on a single computing device or distributed on a network formed by a plurality of computing devices, and may optionally be implemented by program codes executable for the computing devices, so that the components or steps may be stored in a storage device for execution with the computing devices, the shown or described steps may be executed in sequences different from those described here in some circumstances, or may form each integrated circuit component respectively, or multiple components or steps therein may form a single integrated circuit component for implementation. As a consequence, the embodiments of the disclosure is not limited to any specific hardware and software combination.

The above is only the preferred embodiment of the disclosure and not intended to limit the embodiments of the disclosure. For those skilled in the art, the embodiments of the disclosure may have various modifications and variations. Any modifications, equivalent replacements, improvements and the like made within the spirit and principle of the embodiments of the disclosure shall fall within the scope of protection of the embodiments of the disclosure.

### Industrial Applicability

By the embodiments and the preferred implementation modes, the problem of potential safety hazards in the joining network process for the sensor due to existence of the illegal intruder in the related technology is solved, and the effect of effectively improving access security of the sensor is further achieved.

## Claims

1. A method for joining network processing of a sensor, comprising:
receiving a joining network request message used for requesting to perform joining network on the sensor, wherein the joining network request message contains Identity, ID, information of the sensor;
determining a joining network state of the sensor according to the ID information; and
sending the determined joining network state to an Internet of things gateway, wherein the joining network state is used for executing joining network processing on the sensor by the Internet of things gateway.

2. The method as claimed in claim 1, wherein receiving the joining network request message used for requesting to perform joining network on the sensor comprises at least one of:
receiving the joining network request message from the Internet of things gateway; and
receiving the joining network request message from a mobile terminal Application, APP.

3. The method as claimed in claim 1, wherein the ID information of the sensor comprises at least one of:
a unique ID of the sensor, a type of the sensor and a working manner of the sensor.

4. A method for joining network processing of a sensor, comprising:
receiving a joining network request message used for requesting to perform joining network on the sensor, wherein the joining network request message contains Identity, ID, information of the sensor;
sending the joining network request message to network platform equipment;
receiving a joining network state, determined by the network platform equipment according to the ID information, of the sensor; and
executing joining network processing on the sensor according to the determined joining network state.

5. The method as claimed in claim 4, wherein executing joining network processing on the sensor according to the determined joining network state comprises:
forbidding execution of joining network processing on the sensor under a condition that the joining network state is that joining network has been executed on the sensor or the joining network on the sensor is forbidden; and/or,
triggering to execute joining network processing on the sensor under a condition that the joining network state is that the joining network has not been executed on the sensor or the joining network on the sensor is allowed.

6. A device for joining network processing of a sensor, comprising:
a first receiving component, arranged to receive a joining network request message used to request for performing joining network on the sensor, wherein the joining network request message contains Identity, ID, information of the sensor;
a determination component, arranged to determine a joining network state of the sensor according to the ID information; and
a sending component, arranged to send the determined joining network state to an Internet of things gateway, wherein the joining network state is used for executing joining network processing on the sensor by the Internet of things gateway.

7. The device as claimed in claim 6, wherein the first receiving component comprises at least one of:
a first receiving unit, arranged to receive the joining network request message from the Internet of things gateway; and
a second receiving unit, arranged to receive the joining network request message from a mobile terminal Application, APP.

8. Network platform equipment, comprising the device according to any one of claims 6-7.

9. A device for joining network processing of a sensor, comprising:
a second receiving component, arranged to receive a joining network request message used for requesting to perform joining network on the sensor, wherein the joining network request message contains Identity, ID, information of the sensor;
a first sending component, arranged to send the joining network request message to network platform equipment;
a third receiving component, arranged to receive a joining network state, determined by the network platform equipment according to the ID information, of the sensor; and
a processing component, arranged to execute joining network processing on the sensor according to the determined joining network state.

10. The device as claimed in claim 9, wherein the processing component comprises:
a first processing unit, arranged to forbid execution of joining network processing on the sensor under a condition that the joining network state is that joining network has been executed on the sensor or joining network is forbidden; and/or,
a second processing unit, arranged to trigger to execute joining network processing on the sensor under a condition that the joining network state is that joining network has not been executed on the sensor or joining network is allowed.

11. An Internet of things gateway, comprising the device according to any one of claims 9-10.
